# EUROPÄISCHE PATENTANMELDUNG

(11) **EP 2 631 265 A1**
(43) Veröffentlichungstag der Anmeldung: **28.08.2013**
(21) Anmeldenummer: 12156698.8
(22) Anmeldetag: 23.02.2012
(51) Int. Cl.: C08J 11/08

(54) **Verfahren zum Recyceln von teilvernetzten Polyolefinen**

(71) Anmelder: Trocellen GmbH, 53840 Troisdorf (DE)
(72) Erfinder: Rota, Fausto, 24010 Gerosa (IT)
(74) Vertreter: Wübken, Ludger

(57) **Zusammenfassung**

Es wird ein Verfahren beschrieben zum Recyceln von teilvernetzten Polyolefinen, insbesondere teilvernetztem Polyethylen, mit folgenden Verfahrensschritten:
- die unvernetzten Bestandteile des teilvernetzten Polyolefins werden mit einem Lösungsmittel selektiv zumindest zum Teil gelöst;
- aus der Lösung wird das unvernetzte Polyolefin zurückgewonnen.

## Beschreibung

Die Erfindung betrifft ein Verfahren zum Recyceln von teilvernetzten Polyolefinen, insbesondere von teilvernetztem Polyethylen.

### Technisches Gebiet

Vernetzter Polyolefinschaum wird industriell in großem Umfang verwendet. Für die Herstellung von Polyolefinschäumen wird insbesondere Polyethylen mit einem Schäummittel, insbesondere Azodicarbonamid, versehen und als sogenannte Matrix extrudiert. Die Matrix kann dabei chemische Vernetzungsmittel, insbesondere Dicumylperoxid, enthalten und/oder nach Extrusion der Matrix durch Elektronenbeschuss (β-Strahlung) physikalisch vernetzt werden. Für die Herstellung eines Schaumstoffs wird das Polyolefin in aller Regel nur zu einem gewissen Anteil vernetzt, wobei der Vernetzungsgrad als sogenannter Gel-Gehalt bestimmt wird und in der Regel zwischen 30 und 80 % beträgt.

### Stand der Technik

Aus der DIN EN 579 ist es bekannt, zur Bestimmung des Vernetzungsgrades teilvernetzte Polyolefine bei einer Temperatur von 120 °C in Xylol zu behandeln. Durch Wiegen des unlöslichen Anteils wird der Gel-Gehalt, also der vernetzte Anteil des Polyolefins, bestimmt.

Polyethylen-Schaumstoffe werden üblicherweise in Bahnenware, in geringerem Umfang auch in Form von großen Blöcken oder dünneren Folien hergestellt und häufig durch Ausstanzen von Formteilen und beispielsweise thermische Umformung weiter verarbeitet. Die anfallenden Stanzreste etc. können wegen ihrer Vernetzung nicht ohne weiteres in den Produktionsprozess zurückgeführt werden. Sie werden üblicherweise für geringwertige Produkte wie Polstermaterialien etc. verwendet ("Downcyclen") oder energetisch durch Verbrennen genutzt.

### Aufgabe

Aufgabe der vorliegenden Erfindung ist es, ein alternatives Verfahren zum Recyceln von teilvernetzten Polyolefinen, insbesondere teilvernetztem Polyethylen zur Verfügung zu stellen.

### Darstellung der Erfindung

Die Erfindung löst diese Aufgabe durch ein Verfahren nach Anspruch 1, bevorzugt in Verbindung mit einem oder mehreren der Merkmale der Unteransprüche.

Kern der Erfindung ist es, den löslichen Anteil des teilvernetzten Polyolefin-Materials mit an sich bekannten Lösungsmitteln herauszulösen und aus diesen den unvernetzten Polyehtylen-Anteil wiederzugewinnen. Aus der unlöslichen Fraktion des Ausgangsmaterials können ggf. in einem weiteren Verarbeitungsschritt weitere nutzbare Rohstoffe zurückgewonnen werden, alternativ kann diese Fraktion jedoch auch - wie im Stand der Technik bislang für das gesamte Material üblich - beispielsweise durch Verbrennen thermisch genutzt werden.

Das erfindungsgemäße Verfahren eignet sich in besonderem Maße für das Recyceln von teilvernetzten Polyolefinschaumstoffen, insbesondere von chemisch und/oder physikalisch vernetztem Polyethylen-Schaumstoff, insbesondere mit einem Vernetzungsgrad zwischen 30 und 80 %.

Nach einer bevorzugten Ausführungsform der Erfindung wird Xylol als Lösungsmittel verwendet. Grundsätzlich ist es jedoch möglich, auch andere Lösungsmittel einzusetzen, in denen unvernetztes Polyolefin lösbar, vernetztes Polyolefin jedoch nicht lösbar ist.

## Patentansprüche

1. Verfahren zum Recyceln von teilvernetzten Polyolefinen, insbesondere teilvernetztem Polyehtylen, mit folgenden Verfahrensschritten:
- die unvernetzten Bestandteile des teilvernetzten Polyolefins werden mit einem Lösungsmittel selektiv zumindest zum Teil gelöst;
- aus der Lösung wird das unvernetzte Polyolefin zurückgewonnen.

2. Verfahren nach Anspruch 1, **dadurch gekennzeichnet, dass** als teilvernetztes Polyolefin ein chemisch oder physikalisch vernetzter Polyethylen-Schaumstoff mit einem Vernetzungsgrad zwischen 30 und 80 % verwendet wird.

3. Verfahren nach Anspruch 1 oder 2, ***dadurch* gekennzeichnet, *dass*** als Lösungsmittel Xylol verwendet wird.

4. Verfahren nach einem der Ansprüche 1 bis 3, ***dadurch gekennzeichnet, dass*** der im ersten Verfahrensschritt nicht gelöste Anteil des teilvernetzten Polyolefins mit einer Säure behandelt wird.

5. Verfahren nach einem der Ansprüche 1 bis 4, ***dadurch gekennzeichnet, dass*** das Lösen der unvernetzten Bestandteile des teilvernetzten Polyolefins mit dem Lösungsmittel bei einer Temperatur zwischen 100 und 150 °C erfolgt.

6. Verfahren nach einem der Ansprüche 1 bis 5, ***dadurch gekennzeichnet, dass*** das Zurückgewinnen des unvernetzten Polyolefins aus der Lösung durch Destillation der Lösung erfolgt und dass die Lösungsmittelfraktion aus der Destillation zur weiteren Lösung des unvernetzten Polyolefins im Verfahrensschritt 1 wiederverwendet wird.
